# EUROPÄISCHE PATENTSCHRIFT

(11) **EP 3 318 781 B1**
(45) Veröffentlichungstag und Bekanntmachung des Hinweises auf die Patenterteilung: **02.09.2020**
(21) Anmeldenummer: 17199848.7
(22) Anmeldetag: 03.11.2017
(51) Int. Cl.: F16H 25/20, F16H 25/22

(54) **SPINDELMUTTEREINHEIT ZUM ANTREIBEN EINES HOCHAUFTRIEBSSYSTEMS EINES FLUGGERÄTS**
SPINDLE NUT UNIT FOR DRIVING A LIFT SYSTEM OF AN AIRPLANE
UNITÉ D'ÉCROU DE LA BROCHE DESTINÉE À L'ENTRAÎNEMENT D'UN SYSTÈME HYPERSUSTENTATEUR D'UN APPAREIL VOLANT

(30) Priorität: 07.11.2016 DE 202016006848 U
(43) Veröffentlichungstag der Anmeldung: 09.05.2018
(73) Patentinhaber: Liebherr-Aerospace Lindenberg GmbH, 88161 Lindenberg/Allgäu (DE)
(72) Erfinder: Berger, Lutz, 88161 Lindenberg (DE)
(74) Vertreter: Laufhütte, Dieter

(56) Entgegenhaltungen:
- WO-A2-2015/107208
- DE-A1-102011 119 946
- DE-T2- 69 912 236
- US-A1- 2004 020 379

## Beschreibung

Die Erfindung betrifft eine Spindelmuttereinheit zum Antreiben eines Hochauftriebssystems eines Fluggeräts, insbesondere eines Flugzeugs, wobei die Spindelmuttereinheit eine Spindelmutter und eine Spindel sowie zwei kardanische Aufhängungen umfasst.

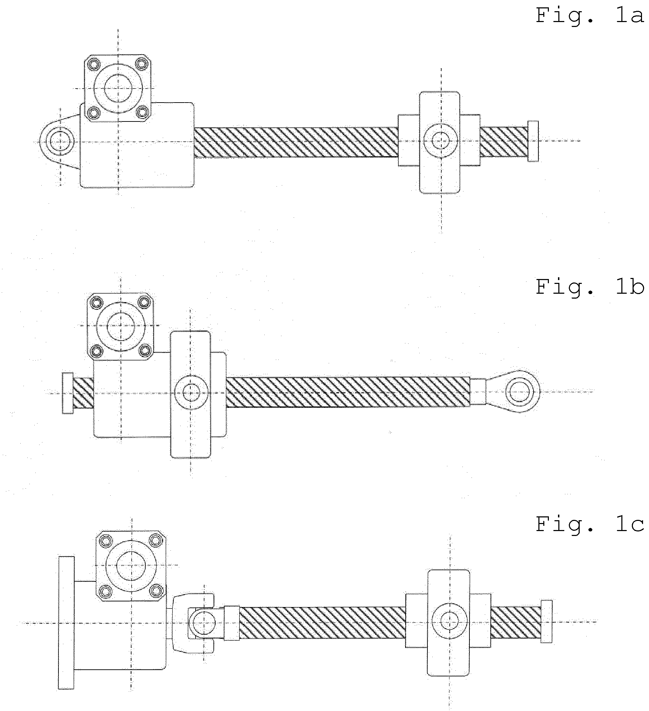

Gattungsgemäße Spindelmuttereinheiten, welche auch als Ball-Screw-Aktuatoren bezeichnet werden können, weisen gemäß Figur 1a eine nach außen ungeschützte Spindel auf, welche daher nachteiligerweise beispielsweise durch Verschmutzungen beeinträchtigt werden kann.

Gemäß Figur 1b sind aus dem Stand der Technik auch Spindelmuttereinheiten mit kardanisch entkoppelten Spindeln bzw. Spindelmuttern bekannt. Insbesondere von primären Flugsteuerungsaktuatoren sind auch Bauformen bekannt, welche Innenspindeln gemäß Figur 1c verwenden. Auch ist es bekannt, Spindelmuttereinheiten zu verwenden, bei denen eine Außenspindel und eine Faltenbalgabdeckung zum Schutz gegen Verschmutzung vorgesehen sind.

Nachteile des Standes der Technik bestehen beispielsweise hinsichtlich der Wartung und der Nachschmierintervalle entsprechender Vorrichtungen. So ist die Kontur zwischen der Kugelrollspindel und der Mutter in der Regel nicht wirkungsvoll mit einer dynamischen Dichtung abdichtbar. Die außenliegende Spindel ist im ausgefahrenen Zustand der Klappe verstärk Verschmutzung und Spritzwasser ausgesetzt. Dies führt zur Verschmutzung der Fettfüllung, insbesondere zwischen der Spindelmutter und der Spindel, sowie zum Auswaschen dieser Fettschmierung. Durch die offene Bauweise der Vorrichtung ist dabei nur eine Fettschmierung möglich. Die Fettfüllung im Muttergehäuse muss regelmäßig nachgefüllt und dadurch erneuert werden. Das ausgetretene verschmutzte Fett muss entfernt werden. Dies führt zu ungewünscht höheren "Operating Costs" bzw. Betriebskosten durch entsprechend notwendige Wartungsarbeiten.

Kardanische Spindelantriebe müssen so ausgelegt werden, dass sie sowohl das gefordert Drehmoment als auch die typischerweise hohen axialen Lasten über den vollen Lebenszyklus aushalten können und dabei Schwenkbewegung ermöglichen. Insbesondere die Übertragung der axialen Belastung des Kardangelenkes erfordert dabei viel konstruktiven Aufwand.

Innenspindeln in geschlossenen Systemen sind im Vergleich zu Außenspindeln hinsichtlich des Hubs bzw. der Spindellänge begrenzt und werden somit für die relativ langen Hübe bei Hochauftriebssystemen nicht benutzt. Diese Aktuatoren finden ihren Einsatz in den primären Flugsteuerungen (Elektromechanische Antriebe), mit im Vergleich zu Hochauftriebssystemen kurzen Hüben aber vielen Bewegungszyklen. Der Wartungsaufwand ist allerding im Vergleich zur Außenspindel stark reduziert weil Ölschmierung realisiert werden kann.

Ein Faltenbalg bietet zwar einen gewissen Schutz gegen Verschmutzung und Spritzwasser, dennoch ist auch schon aus dem Automobilbereich bekannt, dass z.B. sehr feiner Staub nach wie vor eindringen kann. Zudem kommt es zumindest bei Gummimanschetten mit der Zeit z.B. durch Ozoneinstrahlung oder tiefste Temperaturen zur Versprödung bzw. Auflösung. Daraus ist abzuleiten, dass auch bei auf Faltenbalgen basierenden Lösungen ein gewisser Wartungsaufwand erhalten bleibt.

Die WO 2015 / 107 208 A2 offenbart eine motorbetriebene Spindelmuttereinheit, welche über eine erste kardanische Aufhängung an einem Rumpf und über eine zweite kardanische Aufhängung an einem Höhenleitwerk eines Flugzeugs angelenkt ist. Die Spindel wird von einer Motoreinheit rotatorisch angetrieben, wodurch die an der Spindel angeordnete Mutter translatorisch entlang der Spindel auf und ab bewegt werden kann, um eine Verschwenkung des Höhenleitwerks um eine Achse herbeizuführen. Die die Spindel antreibende Motoreinheit ist über die erste kardanische Aufhängung an den Flugzeugrumpf angelenkt. Die zweite kardanische Aufhängung ist mit der Mutter verbunden, sodass die Mutter an dem Höhenleitwerk angelenkt ist.

Vor diesem Hintergrund ist es Aufgabe der Erfindung eine Spindelmuttereinheit bereitzustellen, bei der der Wartungsaufwand möglichst minimiert ist und dennoch die zum Betrieb eines Hochauftriebssystems erforderliche große Hublänge erreicht bzw. ermöglicht werden kann. Zudem soll die Spindelmuttereinheit bzw. ein entsprechender Aktuator eine konische bzw. teilweise spherische Bewegung in alle drei Raumrichtungen ermöglichen und so entsprechend flexibel lagerbar sein.

Diese Aufgabe wird erfindungsgemäß durch eine Spindelmuttereinheit mit den Merkmalen des Anspruchs 1 gelöst. Vorteilhafte Weiterbildungen sind Gegenstand der Unteransprüche. Demnach umfasst die Spindelmuttereinheit eine Spindelmutter und eine Spindel sowie zwei kardanische Aufhängungen, wobei die Spindelmuttereinheit über die zwei kardanischen Aufhängungen mit Anschlüssen des Fluggeräts koppelbar ist. Erfindungsgemäß ist vorgesehen, dass die beiden kardanischen Aufhängungen einen gemeinsamen Mittelpunkt haben bzw. mit einem gemeinsamen Mittelpunkt ausgebildet sind und dass die erste kardanische Aufhängung zur Drehmomentübertragung an die Spindelmutter oder die Spindel und die zweite kardanische Aufhängung zur Kraftübertragung an die Spindelmutter ausgebildet ist.

Jede der beiden kardanischen Aufhängungen kann dabei zwei sich schneidende und zueinander rechtwinklig angeordnete Drehlager umfassen. Wenigstens eine der beiden kardanischen Aufhängungen kann als Kardangelenk ausgebildet sein. Eine der beiden Aufhängungen kann ferner innerhalb der anderen kardanischen Aufhängungen gelagert bzw. angeordnet sein, wobei hierdurch eine Anordnung der beiden kardanischen Aufhängungen ermöglicht wird, bei der die beiden kardanischen Aufhängungen einen gemeinsamen Mittelpunkt haben. Als Mittelpunkt einer kardanischen Aufhängung kann vorliegend derjenige Bereich der Aufhängung bezeichnet werden, an dem sich die Drehachsen der beiden Drehlager der Aufhängung kreuzen. Durch die doppelte kardanische Aufhängung ist es möglich, eine Spindelmuttereinheit bzw. einen entsprechenden Aktuator bereitzustellen, der schwenkbar gelagert bzw. lagerbar ist, ohne dass sich dessen Raumbedarf oder das Routing der Transmission ändert.

Ferner ermöglichen die beiden kardanischen Aufhängungen eine Trennung der Lastpfade, wobei Zug- und Druckkräfte über ein kardanisch aufgehängtes Gehäuse aufgenommen und in die Struktur bzw. in die Fluggerätstruktur aufgenommen werden können und Drehmomente davon getrennt über eine Eingangswelle einer anderen kardanischen Aufhängung aufgenommen bzw. übertragen werden können.

Die Spindelmutter kann in einer bevorzugten Ausführung über ein Rohr mit der ersten kardanischen Aufhängung verbunden sein, wobei ferner die Spindel insbesondere innerhalb des Rohrs geführt sein kann. Das Rohr kann einstückig mit der Spindelmutter gefertigt sein und zusätzlich oder alternativ einen Anschluss in einem der Spindelmutter gegenüberliegenden Bereich zum Anschließen bzw. Verbinden mit der ersten kardanischen Aufhängung umfassen. Der Anschluss kann einstückig mit dem Rohr gefertigt und/oder Teil der ersten kardanischen Aufhängung sein. Das Rohr kann die Spindelmutter von der ersten kardanischen Aufhängung beabstanden und ermöglicht eine Positionierung der Spindelmutter in einem definierten, hinreichend großen Abstand von der ersten kardanischen Aufhängung.

In einer weiteren bevorzugten Ausführung ist denkbar, dass innerhalb des Rohres eine Schmierstoffaufnahme vorgesehen ist. Demnach kann das Rohr oder ein Teil des Rohres gleichzeitig als Schmierstoffspeicher dienen, wodurch die Konstruktion der Spindelmuttereinheit vereinfacht ist.

In einer weiteren bevorzugten Ausführung kann ferner vorgesehen sein, dass eine Durchführung zur Rückführung von Schmierstoff in die Schmierstoffaufnahme vorgesehen ist. Die Durchführung kann hierbei innerhalb der Spindel oder innerhalb des Rohres angeordnet und beispielsweise als Bohrung ausgebildet sein.

Es kann ferner vorgesehen sein, dass das Rohr innerhalb eines Gehäuses drehbar gelagert ist. Zwischen dem Rohr und dem Gehäuse können eine oder mehrere Lagerungen wie beispielsweise Gleit- und/oder Kugellager vorgesehen sein. Alternativ oder zusätzlich kann ferner wenigstens eine Dichtung zwischen dem Rohr und dem Gehäuse vorgesehen sein, die das Eindringen von Verschmutzungen und/oder das Heraustreten von Schmierstoff verhindert.

Das Gehäuse kann in einer besonders bevorzugten Ausführung mit der zweiten kardanischen Aufhängung verbunden sein. Hierzu können Anschlüsse insbesondere einstückig mit dem Gehäuse und weiter insbesondere in einem der Spindelmutter gegenüberliegenden Bereich des Gehäuses vorgesehen sein, die zum Koppeln mit der zweiten kardanischen Aufhängung ausgebildet sind bzw. die Teile der zweiten kardanischen Aufhängung sind.

In einer weiteren bevorzugten Ausführung kann ferner vorgesehen sein, dass das Gehäuse innerhalb einer Abdeckung gelagert ist, welche insbesondere zur gemeinsamen axialen Bewegung mit der Spindel eingerichtet ist. Das Gehäuse und/oder die Abdeckung können hierbei als im Wesentlichen zylinderförmige Bauteile ausgebildet sein. Zwischen dem Gehäuse und der Abdeckung kann ferner wenigstens eine Dichtung vorgesehen sein, die das Eintreten von Verschmutzungen und das Austreten von Schmierstoff verhindert. Das Gehäuse kann axial innerhalb der Abdeckung beweglich gelagert sein, wobei die Abdeckung das Gehäuse je nach Position teilweise oder nahezu ganz freigeben kann. Die Abdeckung kann relativ zur Spindel festgestellt sein und mit dieser relativ zum Gehäuse axial bewegt werden.

Die Erfindung ist ferner auf einen Spindelantrieb mit einem Abzweiggetriebe und einer Spindelmuttereinheit nach einem der Ansprüche 1 bis 8 gerichtet, wobei das Abzweiggetriebe und die Spindelmuttereinheit über die erste der beiden kardanischen Aufhängungen der Spindelmuttereinheit miteinander zur Drehmomentübertragung gekoppelt sind. Der Spindelantrieb kann über die zweite der beiden kardanischen Aufhängungen mit einer weiteren Struktur des Fluggeräts zum Übertragen von Axiallasten gekoppelt oder koppelbar sein.

Die Erfindung ist auch auf ein Fluggerät mit wenigstens einer Spindelmuttereinheit nach einem der Ansprüche 1 bis 8 gerichtet.

Weitere Einzelheiten und Vorteile sind anhand der in den Figuren beispielhaft gezeigten Figuren erläutert. Dabei zeigen:
- Figuren 1a-1c:: Spindelmuttereinheiten gemäß dem Stand der Technik;
- Figuren 2a-2d:: eine erfindungsgemäße Spindelmuttereinheit gemäß einer ersten Variante; und
- Figuren 3a-3c:: eine erfindungsgemäße Spindelmuttereinheit gemäß einer zweiten Variante.

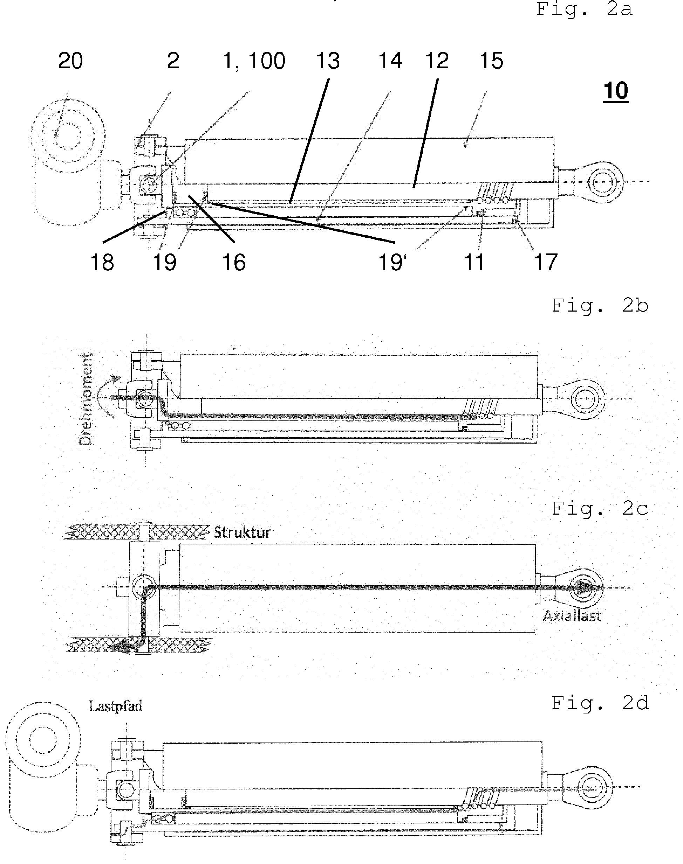

Figuren 1a bis 1c zeigen verschiedene aus dem Stand der Technik bekannte Spindelmuttereinheiten, wobei diese zum Antreiben von Auftriebssystemen von Flugzeugen benutzt werden können und eine nach außen ungeschützte oder unzureichend geschützte Spindel aufweisen. Figur 1c zeigt eine kardanisch entkoppelte Spindelmuttereinheit und Figur 2d eine aus primären Flugsteueraktuatoren bekannte Spindelmuttereinheit mit Innenspindel. Bekannt ist auch eine Spindelmuttereinheit mit Außenspindel und Faltenbalgabdeckung zum Schutz gegen Verschmutzungen (hier nicht dargestellt).

Figur 2a zeigt eine erfindungsgemäße Spindelmuttereinheit 10 zum Antreiben eines Hochauftriebssystems eines Fluggerätes, wobei es sich bei dem Fluggerät um ein Flugzeug handeln kann. Die Spindelmuttereinheit 10 umfasst eine Spindelmutter 11 und eine darin gelagerte Spindel 12. Die Spindelmuttereinheit 10 ist über zwei kardanische Aufhängungen 1, 2 mit weiteren Komponenten koppelbar, insbesondere kann die Spindelmuttereinheit 10 mit Anschlüssen des Fluggeräts gekoppelt sein. Beide kardanischen Aufhängungen 1, 2 weisen einen gemeinsamen Mittelpunkt 100 auf. Der gemeinsame Mittelpunkt 100 der kardanischen Aufhängungen 1, 2 kann auf der Verlängerung der Längsachse der Spindel 12 liegen. Die erste kardanische Aufhängung 1 kann beispielsweise innerhalb der zweiten kardanischen Aufhängung 2 gelagert sein und ist zur Drehmomentübertragung an die Spindelmutter 11 ausgebildet. Die zweite kardanische Aufhängung 2 ist zur Übertragung einer axialen Kraft an die Spindelmutter 11 ausgebildet. Die zweite kardanische Aufhängung 2 kann auch als kardansiche Antriebswelle bezeichnet werden und/oder ausgeführt sein.

Die Spindelmutter 11 kann über ein Rohr 13 mit der ersten kardanischen Aufhängung 1 verbunden sein und es ist denkbar, dass die Spindel 12 innerhalb des Rohrs 13 geführt ist. Das Rohr 13, die Spindelmutter 11 und ggf. Teile der ersten kardanischen Aufhängung 1 können einstückig gefertigt sein. Innerhalb des Rohres 13 kann eine Schmierstoffaufnahme 16 vorgesehen werden, welche insbesondere zylinderförmig ausgebildet sein kann. Die Schmierstoffaufnahme 16 kann von den Rohrwandungen des Rohres 13 sowie von einer Deckfläche der Spindel 12 begrenzt sein. Es kann ferner eine Durchführung 17 innerhalb der Spindel 12, innerhalb des Rohrs 13 und/oder innerhalb eines Gehäuses 14 zur Rückführung des Schmierstoffs in die Schmierstoffaufnahme 16 oder in Richtung auf die Schmierstoffaufnahme vorgesehen sein.

Das Rohr 13 kann ferner innerhalb des Gehäuses 14 angeordnet sein, welches zumindest teilweise zylinderförmig ausgebildet sein kann. Das Rohr 13 kann drehbar innerhalb des Gehäuses 14 angeordnet sein, wozu entsprechende Lager zwischen dem Rohr und dem Gehäuse angeordnet sein können. Das Gehäuse 14 und/oder die Spindelmutter 11 können ferner wenigstens einen Anschlag 19, 19' umfassen, an dem die Spindelmutter 11 insbesondere zur Übertragung von Axiallasten beispielsweise an das Gehäuse 14 anschlagen kann. Ein Anschlag oder mehrere Anschläge 19 bzw. Einfahranschläge 19 können dabei die Relativbewegung des Rohres 13 bzw. der damit verbundenen Spindelmutter 11 zur Spindel 12 beim Einfahren der Spindel 12 in das Rohr 13 begrenzen, während ein Anschlag oder mehrere Anschläge 19' bzw. Ausfahranschläge 19' besagte Relativbewegung beim Ausfahren der Spindel 12 begrenzen können. Ein oder mehrere Einfahranschläge 19 können insbesondere im Bereich der Schmierstoffaufnahmen 16 beispielsweise in einem axialen Endbereich der Spindel 12 und/oder in einem dem axialen Endbereich der Spindel 12 gegenüberliegenden Bereich des Rohrs 13 angeordnet sein.

Ein oder mehrere Ausfahranschläge 19' können alternativ oder zusätzlich an der Spindelmutter 11, insbesondere in einem axial von dem Gewinde der Spindelmutter 11 beabstandeten Bereich und/oder an der Spindel 12 angeordnet sein. Ein oder mehrere an der Spindel 12 angeordnete Ausfahranschläge 19' können in einem axialen Endbereich der Spindel 12 und dort beispielsweise an einem radial nach außen weisenden Abschnitt wie beispielsweise einer Zylindermantelfläche der Spindel 12 vorgesehen sein.

Das Gehäuse 14 kann mit der zweiten kardanischen Aufhängung 2 verbunden sein, wobei Teile des Gehäuses 14 Teilen der zweiten kardanischen Aufhängung 2 entsprechen können. Es können auch Teile der kardanischen Aufhängung 2 einstückig mit Teilen des Gehäuses 14 ausgebildet sein.

Das Gehäuse 14 kann innerhalb einer Abdeckung 15 gelagert sein, welche insbesondere zur gemeinsamen axialen Bewegung mit der Spindel 12 ausgebildet sein kann. Die Abdeckung 15 kann einen äußersten Abschnitt der Spindelmuttereinheit 10 bilden. Im Bereich zwischen dem Rohr 13 und dem Gehäuse 14 kann ferner eine Wellendichtung 18 vorgesehen sein, welche den Bereich zwischen dem Gehäuse 14 und dem Rohr 13 nach außen abdichtet. Über die erste kardanische Aufhängung 1 kann die Spindelmuttereinheit 10 mit einem Zweigetriebe 20 gekoppelt sein und so einen erfindungsgemäßen Spindelantrieb bilden.

Figuren 2b bis 2d zeigen, dass durch die zwei erfindungsgemäß vorgesehenen kardanischen Aufhängungen 1, 2 eine Trennung der Lastpfade erfolgt, wobei Drehmomente gemäß Figur 2b über die erste kardanische Aufhängung 1 und Axiallasten gemäß Figuren 2 c und 2d über die zweite kardanische Aufhängung 2 zwischen der Spindelmuttereinheit 10 und weiteren Strukturen des Fluggeräts übertragen werden können. Der Kraftfluss kann hierbei von der Spindel 12, über das Gewinde auf die Spindelmutter 11, von dort weiter über beispielsweise ein Lager auf das Gehäuse 14 und von dort in die genannte weitere Struktur des Fluggeräts erfolgen.

Der Spindelantrieb kann aus zwei Hauptbaugruppen bestehen:
Eine erste Hauptbaugruppe kann das Abzweiggetriebe 20 sein, welches fest mit der Struktur des Flügels verbunden sein kann. Der Verlauf der angeschlossenen Transmissionswellen ist dadurch hubunabhängig, der Platzbedarf eindeutig bestimmt. Das Abzweiggetriebe 20 kann beliebig ausgeführt sein. Im Inneren können Kegelräder, Stirnräder Schneckenantriebe usw. verbaut sein. Höhen- Abstands- und Winkelversätze können dann bzw. damit ausgeglichen werden. Die Integration eines mechanischen Drehmomentbegrenzers oder eines Drehmomentsensors innerhalb des Abzweiggetriebes 20 ist möglich. Das Getriebe kann ölgeschmiert und abgedichtet sein und ist in der Regel wartungsfrei. Die Antriebswelle des Getriebes kann mit einem Kardangelenk enden.

Die zweite Hauptbaugruppe kann die Spindelmuttereinheit 10 bzw. Spindel-Einheit sein und diese kann kardanisch in der Flügelstruktur aufgehängt sein. Das Kardangelenk des Abzweiggetriebeausgangs und der Eingangswelle der Spindelmuttereinheit 10 haben einen gemeinsamen Mittelpunkt. Durch diese Anordnung werden die Betriebslasten in eine axiale Komponente (Luftlasten) und in ein erforderliches Antriebsmoment zerlegt. Die Luftlasten werden direkt in die Struktur, insbesondere über die zweite kardanische Aufhängung 2 eingeleitet. Das Antriebskardangelenk überträgt nur das Drehmoment, das für den Betrieb des Spindelantriebs notwendig ist und kann dementsprechend dimensioniert und effizient ausgelegt werden. Beide kardanischen Komponenten sind mit wartungsfreien Lagerungen ausgeführt.

In einer ersten Variante nach Figuren 2a bis 2d kann die Spindelmuttereinheit 10 nach dem Prinzip "translating screw" arbeiten, d.h. die Mutter wird angetrieben (gedreht) und die Spindel bewegt sich. Die Spindelmutter 11 ist mit einem Rohr 13 verbunden. Die eine Seite des Rohrs 13 ist in einem Gehäuse 14 drehbar gelagert und mit dem Kardangelenk des Abzweiggetriebes, also mit der ersten kardanischen Aufhängung 1, verbunden. Am anderen Ende des Rohrs 13 befindet sich die Spindelmutter 11 mit integrierten Kugelumlenkstücken. Die Spindel 12 taucht in das Antriebsrohr 13.

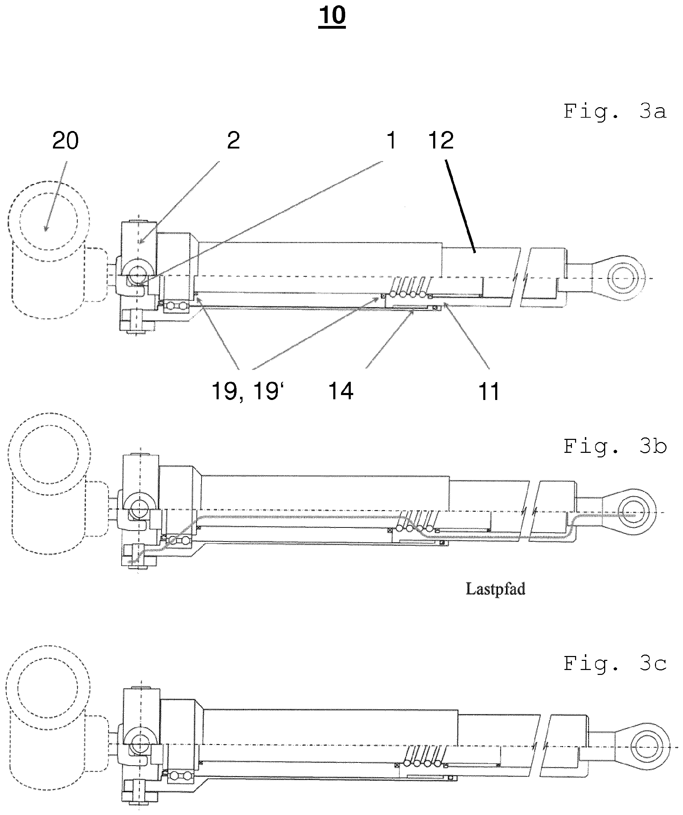

In einer zweiten Variante gemäß Figuren 3a bis 3c kann die Spindel 12 angetrieben sein und die die Mutter 11 sich nach dem "translating nut" Prinzip bewegen. Eine Seite der Spindel 12 kann hierbei im Gehäuse 14 drehbar gelagert sein und über ein Kardangelenk bzw. eine kardanische Aufhängung 1 mit dem Abzweiggetriebe 20 verbunden sein. Komponenten der ersten Variante können entsprechend in der zweiten Variante auftreten, so dass auf einer Wiederholung hierzu verzichtet wird. Für die Kraftflüsse und sonstige Eigenschaften der beiden Varianten gilt jeweils entsprechendes.

In beiden Varianten kann der Hub mit klemmfreien Endanschlägen 19, 19' begrenzt sein. Das komplette Gehäuse 14 ist mit einer Abdeckung 15, die von der Spindel 12 axial mitbewegt wird und/oder die sich axial mitbewegt, geschützt. An der Trennstelle ist eine Kolbenstangendichtung eingebaut. Das Antriebsrohr 13 und/oder der Raum zwischen der Spindel 12 und der Mutter ist wenigstens teilweise mit Getriebeöl gefüllt und/oder dient als Ölreservoir. Durch die Hubbewegung wird stets die Schmierung der Spindel 12 und der Kugelumlenkstücke gewährleistet. Die Hubbewegung kann genutzt werden um aus dem Antriebsrohr 13 bzw. Reservoir ausgetretenes Öl durch eine Bohrung 17 wieder dorthin zurück zu fördern. Durch die Tauchschmierung und die Kapselung ist mit einer langen Lebensdauer der beweglichen Komponenten zu rechnen. Verschmutzung des Schmiermittels und Wasseraufnahme wie bei herkömmlichen Spindelantrieben üblich sind bei intakten Dichtungen minimiert. Da das Volumen des Aktuators im ein- und ausgefahrenem Zustand nicht identisch ist, muss auf ein Druckausgleich geachtet werden um Leckagen zu minimieren.

Vorteile der Erfindung sind:
- Deutliche Reduzierung des Wartungsbedarfs durch:
   o Ölschmierung für Spindel und Kugelumlenkung und dynamische Dichtungen
   o Rückführung des Öls, welches aus dem Antriebsrohr 13 ausgetreten ist
   o Effektive Schmierung durch Tauchbewegung zwischen Spindel und Mutter
- Lange Hübe des Hochauftriebssystems sind realisierbar
- Kardanische Gehäuseaufhängung erlaubt Schwenkbewegung des Aktuators in den geforderten Richtungen, ohne dass sich der Raumbedarf/Routing der Transmission ändert.
- Definierter Druckausgleich um Leckage zu minimieren - "Venting"
- Durch Spindel mitgeführte abgedichtete Abdeckung
- Abdeckung kann als Fail Safe Komponenten gestaltet sein
- Anbindung/Lasteinbringung in die Struktur optimal
- Bewegliche, durch Spindel 12 geführte Abdeckung 15, mit dynamischen Dichtungen, die "State of the Art" sind
- Kardanisch aufgehängtes Aktuatorgehäuse für Bewegungsmöglichkeit des Aktuators in allen Raumrichtungen
- Kardanisch ausgeführte Eingangswelle mit gemeinsamen Drehpunkt mit Gehäuseaufhängung-Trennung der Lastpfade (Zug, Druck und Drehmoment)
   ▪ Zug, Druck wird über kardanisch aufgehängtes Gehäuse aufgenommen und in Struktur geleitet
   ▪ Drehmoment wird Eingangswelle mit Kardangelenk aufgenommen
   ▪ Tauchschmierung der Spindel 12 und Kugelumlenkstücke
   ▪ Keine Verschmutzung der fettbedeckten Spindel 12 durch Sand/Staub oder aggressive Flüssigkeiten
   ▪ weniger Verschleiß - wartungsfrei
   ▪ Ausführung des Inputgetriebes komplett flexibel

## Patentansprüche

1. Spindelmuttereinheit (10) zum Antreiben eines Hochauftriebssystems eines Fluggeräts, insbesondere eines Flugzeugs, wobei die Spindelmuttereinheit (10) eine Spindelmutter (11) und eine Spindel (12) sowie zwei kardanische Aufhängungen (1, 2) umfasst, wobei die Spindelmuttereinheit (10) über die zwei kardanischen Aufhängungen (1, 2) mit Anschlüssen des Fluggeräts koppelbar ist,
**dadurch gekennzeichnet,**
**dass** die beiden kardanischen Aufhängungen (1, 2) einen gemeinsamen Mittelpunkt haben und dass die erste kardanische Aufhängung (1) zur Drehmomentübertragung an die Spindelmutter (11) oder die Spindel (12) und die zweite kardanische Aufhängung (2) zur Kraftübertragung an die Spindelmutter (11) ausgebildet ist.

2. Spindelmuttereinheit (10) nach Anspruch 1, **dadurch gekennzeichnet, dass** die Spindelmutter (11) über ein Rohr (13) mit der ersten kardanischen Aufhängung (1) verbunden ist, wobei die Spindel (12) insbesondere innerhalb des Rohr (13) geführt ist.

3. Spindelmuttereinheit (10) nach Anspruch 2, **dadurch gekennzeichnet, dass** innerhalb des Rohres (13) eine Schmierstoffaufnahme (16) vorgesehen ist.

4. Spindelmuttereinheit (10) nach Anspruch 3, **dadurch gekennzeichnet, dass** eine Durchführung (17) zur Rückführung von Schmierstoff in die Schmierstoffaufnahme (16) vorgesehen ist.

5. Spindelmuttereinheit (10) nach wenigstens einem der Ansprüche 2 bis 4, **dadurch gekennzeichnet, dass** das Rohr (13) innerhalb eines Gehäuses (14) drehbar gelagert ist.

6. Spindelmuttereinheit (10) nach Anspruch 5, **dadurch gekennzeichnet, dass** das Gehäuse (14) mit der zweiten kardanischen Aufhängung (2) verbunden ist.

7. Spindelmuttereinheit (10) nach wenigstens einem der Ansprüche 5 bis 6, **dadurch gekennzeichnet, dass** das Gehäuse (14) innerhalb einer Abdeckung (15) gelagert ist, welche insbesondere zur gemeinsamen axialen Bewegung mit der Spindel (12) eingerichtet ist.

8. Spindelantrieb mit einem Abzweiggetriebe (20) und einer Spindelmuttereinheit (10) nach einem der Ansprüche 1 bis 7, **dadurch gekennzeichnet, dass** das Abzweiggetriebe (20) und die Spindelmuttereinheit (10) über eine der beiden kardanischen Aufhängungen (1, 2) der Spindelmuttereinheit (10) miteinander gekoppelt sind.

9. Fluggerät mit wenigstens einer Spindelmuttereinheit (10) nach einem der Ansprüche 1 bis 7.

## Claims

1. Spindle nut unit (10) for driving a high-lift system of an aircraft, in particular an aeroplane, wherein the spindle nut unit (10) comprises a spindle nut (11) and a spindle (12) as well as two cardanic suspensions (1, 2), wherein the spindle nut unit (10) can be coupled to connections of the aircraft via the two cardanic suspensions (1, 2),
**characterised in that**
the two cardanic suspensions (1, 2) have a common midpoint and **in that** the first cardanic suspension (1) is designed for torque transmission to the spindle nut (11) or the spindle (12) and the second cardanic suspension (2) is designed for force transmission to the spindle nut (11).

2. Spindle nut unit (10) according to claim 1, **characterised in that** the spindle nut (11) is connected to the first cardanic suspension (1) by a tube (13), wherein the spindle (12) in particular is guided inside the tube (13).

3. Spindle nut unit (10) according to claim 2, **characterised in that** a lubricant receptacle (16) is provided inside the tube (13).

4. Spindle nut unit (10) according to claim 3, **characterised in that** a duct (17) is provided for recirculating lubricant into the lubricant receptacle (16).

5. Spindle nut unit (10) according to at least one of claims 2 to 4, **characterised in that** the tube (13) is rotatably mounted inside a housing (14).

6. Spindle nut unit (10) according to claim 5, **characterised in that** the housing (14) is connected to the second cardanic suspension (2).

7. Spindle nut unit (10) according to at least one of claims 5 to 6, **characterised in that** the housing (14) is mounted inside a cover (15), which is configured in particular to move axially together with the spindle (12).

8. Spindle drive, comprising a branch transmission (20) and a spindle nut unit (10) according to any of claims 1 to 7, **characterised in that** the branch transmission (20) and the spindle nut unit (10) are coupled to one another by one of the two cardanic suspensions (1, 2) of the spindle nut unit (10).

9. Aircraft, comprising at least one spindle nut unit (10) according to any of claims 1 to 7.

## Revendications

1. Unité d'écrou de broche (10) servant à entraîner un système hypersustentateur d'un appareil volant, en particulier d'un avion, dans laquelle l'unité d'écrou de broche (10) comprend un écrou de broche (11) et une broche (12) ainsi que deux suspensions à la Cardan (1, 2), dans laquelle l'unité d'écrou de broche (10) peut être couplée à des bornes de l'appareil volant par l'intermédiaire des deux suspensions à la Cardan (1, 2),
**caractérisée en ce**
les deux suspensions à la Cardan (1, 2) ont un point central commun, et que la première suspension à la Cardan (1) est réalisée aux fins de la transmission de couple de rotation à l'écrou de broche (11) ou à la broche (12) et la seconde suspension à la Cardan (2) est réalisée aux fins de la transmission de force à l'écrou de broche (11).

2. Unité d'écrou de broche (10) selon la revendication 1, **caractérisée en ce que** l'écrou de broche (11) est relié à la première suspension à la Cardan (1) par l'intermédiaire d'un tube (13), dans laquelle la broche (12) est guidée en particulier à l'intérieur du tube (13).

3. Unité d'écrou de broche (10) selon la revendication 2, **caractérisée en ce qu'**un logement de lubrifiant (16) est prévu à l'intérieur du tube (13).

4. Unité d'écrou de broche (10) selon la revendication 3, **caractérisée en ce qu'**est prévu un passage (17) servant au retour guidé de lubrifiant dans le logement de lubrifiant (16).

5. Unité d'écrou de broche (10) selon au moins l'une quelconque des revendications 2 à 4, **caractérisée en ce que** le tube (13) est monté de manière à pouvoir tourner à l'intérieur d'un boîtier (14).

6. Unité d'écrou de broche (10) selon la revendication 5, **caractérisée en ce que** le boîtier (14) est relié à la seconde suspension à la Cardan (2).

7. Unité d'écrou de broche (10) selon au moins l'une quelconque des revendications 5 à 6, **caractérisée en ce que** le boîtier (14) est monté à l'intérieur d'un recouvrement (15), lequel est mis au point en particulier aux fins du déplacement axial conjoint avec la broche (12).

8. Entraînement de broche avec un engrenage d'embranchement (20) et une unité d'écrou de broche (10) selon l'une quelconque des revendications 1 à 7, **caractérisé en ce que** l'engrenage d'embranchement (20) et l'unité d'écrou de broche (10) sont couplés l'un à l'autre par l'intermédiaire d'une des deux suspensions à la Cardan (1, 2) de l'unité d'écrou de broche (10).

9. Appareil volant avec au moins une unité d'écrou de broche (10) selon l'une quelconque des revendications 1 à 7.
